# EUROPÄISCHE PATENTSCHRIFT

(11) **EP 4 499 287 B1**
(45) Veröffentlichungstag und Bekanntmachung des Hinweises auf die Patenterteilung: **09.07.2025**
(21) Anmeldenummer: 23715479.4
(22) Anmeldetag: 24.03.2023
(51) Int. Cl.: B01F 31/00, B01F 31/22, B06B 1/16, F16H 21/10

(54) **BEHÄLTERANTRIEB FÜR BAHNKURVE**
CONTAINER DRIVE FOR A TRAJECTORY
MÉCANISME D'ENTRAÎNEMENT DE RÉCIPIENT POUR TRAJECTOIRE

(30) Priorität: 24.03.2022 DE 102022202904
(43) Veröffentlichungstag der Anmeldung: 05.02.2025
(73) Patentinhaber: Hs-Tumbler GmbH, 49610 Quakenbrück (DE)
(72) Erfinder: HUKELMANN, Bernhard, 49610 Quakenbrück (DE)
(74) Vertreter: Taruttis, Stefan Georg
(86) Internationale Anmeldenummer: PCT/EP2023/057720
(87) Internationale Veröffentlichungsnummer: WO 2023/180562

(56) Entgegenhaltungen:
- CN-A- 109 173 873
- JP-A- 2003 065 415
- JP-U- 3 035 120
- US-A- 5 477 743
- US-A- 5 655 836

## Beschreibung

Die vorliegende Erfindung betrifft einen Antrieb, mit dem ein Behälter in einer Ebene entlang einer Bahnkurve angetrieben und zwangsgeführt werden kann, sowie ein Verfahren zur Behandlung von Inhaltsstoffen, insbesondere Mischungen, in einem Behälter, der mittels des Antriebs entlang einer Bahnkurve angetrieben und zwangsgeführt ist.

Der Antrieb hat den Vorteil, insbesondere ohne einen Linearantrieb aufzuweisen, bevorzugt ausschließlich mit Drehantrieben und Rotationslagern, einen Behälter in einer zwangsgeführten Hin- und Herbewegung entlang einer Bahnkurve zu bewegen. In einer optionalen Ausführungsform weist der Antrieb keine Linearführung oder Kulissenführung auf.

Die JP 2003 065415 A beschreibt einen Mechanismus, der als Roboterbein ausgeführt sein kann, mit zwei um parallele Achsen rotierenden Hebeln, die mit jeweils zwei unterschiedlich langen Arme verbunden sind, von denen die den rotierenden Hebeln gegenüberliegenden Enden unterschiedlich langer Arme verbunden sind und an diesen Verbindungsstellen zwei weitere Arme angebracht sind, deren gegenüberliegende Enden miteinander verbunden sind.

Der Erfindung stellt sich die Aufgabe, einen alternativen Antrieb bereitzustellen, der eine Hin- und Herbewegung entlang einer Bahnkurve ermöglicht, bevorzugt nur Drehmotoren aufweist und optional keinen Linearantrieb aufweisen soll.

Die Erfindung löst die Aufgabe mit den Merkmalen der Ansprüche und insbesondere mittels eines Antriebs, der einen an einem ersten ortsfesten Schwenklager angelenkten ersten Hebel, einen gegenüber dem ersten Schwenklager am ersten Hebel in einem ersten Verbindungslager angelenkten zweiten Hebel, an dem gegenüber dem ersten Hebel eine Behälteraufnahme angebracht ist,
einen an einem zweiten ortsfesten Schwenklager angelenkten dritten Hebel, einen gegenüber dem zweiten ortsfesten Schwenklager am dritten Hebel in einem zweiten Verbindungslager angelenkten vierten Hebel, an dem gegenüber dem dritten Hebel die Behälteraufnahme angebracht ist, aufweist,
wobei das erste ortsfeste Schwenklager und das zweite ortsfeste Schwenklager zueinander festgelegt sind, in einem Abstand voneinander oder um dieselbe Schwenkachse schwenkbar, und wobei zumindest einer, bevorzugt jeder von zweitem Hebel und viertem Hebel schwenkbar an der Behälteraufnahme angelenkt ist. Dadurch, dass einer oder jeder von zweitem und viertem Hebel schwenkbar, auch als drehbar bezeichnet, an der Behälteraufnahme angelenkt ist, ist die Behälteraufnahme so an dem zweiten und dem vierten Hebel angebracht, dass der zweite und der vierte Hebel an der Behälteraufnahme gegeneinander verschwenkbar sind.

Da das erste ortsfeste Schwenklager und das zweite ortsfeste Schwenklager zueinander festgelegt sind, bilden sie für den ersten und den daran schwenkbar angelenkten zweiten Hebel sowie für den dritten und den daran schwenkbar angelenkten vierten Hebel in einem Abstand angeordnete Festlager, bzw. Festlager mit beabstandeten Schwenkachsen, oder Festlager mit gemeinsamer Schwenkachse. Gegenüber dem Festlager bilden der zweite und der vierte Hebel ein Loslager an der Behälteraufnahme.

Jeweils einer von erstem und zweitem Hebel und einer von drittem und viertem Hebel ist durch einen Exzenterantrieb angetrieben, z.B. jeweils mit einem separaten Drehmotor oder einem gemeinsamen Drehmotor mit zwischenliegendem Getriebe. An jeweils einem von erstem und zweitem Hebel und an einem von drittem und viertem Hebel kann ein Exzenterantrieb angelenkt sein, der bevorzugt ortsfest, alternativ verschieblich, zum ersten und zweiten Schwenklager angeordnet sind. Dabei ist ein erster Exzenterantrieb am ersten Hebel oder am zweiten Hebel angelenkt, und ein zweiter Exzenterantrieb ist am dritten Hebel oder am vierten Hebel angelenkt. Bevorzugt ist ein erster Exzenterantrieb am ersten Hebel angelenkt und ein zweiter Exzenterantrieb ist am dritten Hebel angelenkt. Dabei kann jeder Exzenterantrieb dadurch an einem Hebel angelenkt sein, dass am Hebel eine Kulissenführung, die sich zumindest abschnittsweise entlang des Hebels erstreckt, angebracht ist, und in der Kulissenführung ein von einem Drehmotor zur Bewegung entlang einer Kreisbahn bzw. zur Kreisbewegung angetriebener Antriebsbolzen geführt ist.

Der Antrieb zur Hin- und Herbewegung der Behälteraufnahme entlang einer Bahnkurve weist bevorzug einen an einem ersten ortsfesten Schwenklager angelenkten ersten Hebel auf, einen gegenüber dem ersten Schwenklager am ersten Hebel in einem ersten Verbindungslager angelenkten zweiten Hebel, an dem gegenüber dem ersten Hebel eine Behälteraufnahme angebracht ist, einem an einem zweiten ortsfesten Schwenklager angelenkten dritten Hebel, einen gegenüber dem zweiten ortsfesten Schwenklager am dritten Hebel in einem zweiten Verbindungslager angelenkten vierten Hebel, an dem gegenüber dem dritten Hebel die Behälteraufnahme angebracht ist, wobei das erste ortsfeste Schwenklager und das zweite ortsfeste Schwenklager zueinander festgelegt sind, in einem Abstand voneinander oder um dieselbe Schwenkachse schwenkbar, und wobei zumindest einer von zweitem Hebel und viertem Hebel schwenkbar an der Behälteraufnahme angelenkt ist, mit einem ersten Exzenterantrieb, der mit einem von erstem Hebel und zweitem Hebel verbunden ist, z.B. angelenkt, und einem zweiten Exzenterantrieb, der mit einem von drittem Hebel und viertem Hebel verbunden ist, z.B. angelenkt.

Das erste Verbindungslager, das den ersten Hebel schwenkbar am zweiten Hebel anlenkt, ist ein Loslager, und das zweite Verbindungslager, das den dritten Hebel schwenkbar am vierten Hebel anlenkt, ist ein Loslager.

Gegenüber dem ersten Hebel ist am zweiten Hebel die Behälteraufnahme angebracht, vorzugsweise an einem dritten Schwenklager. Gegenüber dem dritten Hebel ist am vierten Hebel die Behälteraufnahme angebracht, vorzugsweise an einem vierten Schwenklager, wobei das dritte Schwenklager und das vierte Schwenklager in einem Abstand voneinander an der Behälteraufnahme angebracht sein können, oder mit gemeinsamer Schwenkachse. Optional ist die Behälteraufnahme gegenüber dem ersten Hebel fest mit dem zweiten Hebel verbunden und der vierte Hebel ist in einem Schwenklager schwenkbar an der Behälteraufnahme angelenkt.

Bevorzugt sind die Schwenkachsen des ersten Schwenklagers und des zweiten Schwenklagers sowie die Schwenkachsen des ersten und des zweiten Verbindungslagers und die Schwenkachsen des dritten und des vierten Schwenklagers parallel zueinander angeordnet.

Das erste Schwenklager und das zweite Schwenklager, sowie der erste und der zweite Exzenterantrieb können ortsfest an einem gemeinsamen Gestell angebracht sein, wobei das erste und das zweite Verbindungslager sowie die Behälteraufnahme relativ zum Gestell beweglich sind, wobei die Behälteraufnahme bevorzugt nur durch den zweiten Hebel, der am ersten Hebel angelenkt ist, und den vierten Hebel, der am dritten Hebel angelenkt ist, geführt ist.

Der erste und/oder der zweite Exzenterantrieb können durch jeweils einen Drehantrieb mit exzentrischem Antriebsarm daran gebildet sein. Ein Antriebsarm des ersten Exzenterantriebs ist z.B. mit einem von erstem und zweiten Hebel schwenkbar verbunden, ein Antriebsarm des zweiten Exzenterantriebs ist mit einem von drittem und viertem Hebel schwenkbar verbunden.

Alternativ können der erste und/oder der zweite Exzenterantrieb durch jeweils einen Drehantrieb gebildet sein, der von einem in einer Führung verschieblichen Antriebsbolzen gebildet wird, der von einem Drehantrieb insbesondere entlang einer Kreisbahn bzw. zur Kreisbewegung angetrieben ist. Zumindest einer oder beide der Exzenterantriebe kann eine Kulissenführung, die sich entlang des vom Exzenterantrieb angetriebenen Hebels erstreckt, und einen in der Kulissenführung geführten, von einem Drehmotor angetriebenen Antriebsbolzen aufweisen.

Optional sind der erste und der zweite Exzenterantrieb von einem gemeinsamen Motor angetrieben, bevorzugt mit einem Getriebe, das weiter bevorzugt schaltbar ist, um die Exzenterantriebe mit gleichbleibendem oder veränderlichem Geschwindigkeitsverhältnis zueinander anzutreiben. Bevorzugt ist das Getriebe ein Riemengetriebe oder Reibradgetriebe. Der erste und der zweite Exzenterantrieb können von jeweils einem Motor angetrieben sein, von denen einer oder beide gesteuert sind, um die Exzenterantriebe mit gleichbleibendem oder veränderlichem Geschwindigkeitsverhältnis zueinander anzutreiben. Alternativ können der erste Exzenterantrieb und der zweite Exzenterantrieb von einem gemeinsamen gesteuerten und ortsfest angebrachten Drehmotor mit Getriebe angetrieben sein, wobei das Getriebe bevorzugt eingerichtet ist, die Übersetzung und/oder den Phasenversatz für die beiden Exzenterantriebe zueinander zu ändern.

Der erfindungsgemäße Antrieb hat den Vorteil, dass er durch zwei Drehmotoren mit Exzenterantrieb oder einen Drehmotor mit Getriebe und Exzenter angetrieben ist und z.B. in einer Ausführungsform keinen Linearantrieb und keine Linearführungen oder Kulissenführungen aufweist.

Der Antrieb ist für die Hin- und Herbewegung des Behälters entlang einer Bahnkurve eingerichtet, z.B. mit einer Drehfrequenz eines oder beider Exzenterantriebe, gleich oder verschieden, von zumindest 1 Hz, um die Hin- und Herbewegung der Behälteraufnahme anzutreiben. Die Bahnkurve der Hin- und Herbewegung wird durch Überlagerung der Bewegung entlang zweier Achsen, mit jeweils unterschiedlicher Frequenz und/oder mit Phasenversatz der Drehfrequenz der Exzenterantriebe erzeugt, z.B. über einen Weg entlang jeder Achse von bevorzugt zumindest 2,5 mm, zumindest 1 cm, zumindest 2 cm oder zumindest 3 cm oder zumindest 10 cm, z.B. bis 50 cm, bis 30 cm, bis 20 oder, bei kürzeren Wegen, bis 10 cm.

Die Hin- und Herbewegung der Behälteraufnahme kann sich beispielsweise über einen Weg von zumindest 1,5 mm bevorzugter zumindest 3mm bevorzugter zumindest 1 cm, bevorzugter zumindest 2 cm oder zumindest 5 cm, zumindest 10 cm oder zumindest 15 cm z.B. bis 50 cm, bis 30 cm oder bis 20 cm erstrecken. Weiter bevorzugt sind die Exzenterantriebe zur Hin- und Herbewegung des Behälters harmonisch entlang einer Bahnkurve gesteuert. Die Hin- und Herbewegung ist nicht-linear und kann sinusförmig, schleifenförmig oder bogenförmig sein, bevorzugt entlang einer Bahnkurve verlaufen, die bevorzugt in der Ebene liegt, bzw. zweidimensional ist. Denn generell fördert eine nicht-lineare Bewegungsachse, vorzugsweise eine Hin- und Herbewegung entlang einer Bahnkurve, die eine Lissajous-Figur oder Hypozykloide sein kann, eine gleichmäßige und intensive Durchmischung von Bestandteilen einer Zusammensetzung, die in einem an der Behälteraufnahme angebrachten Behälter enthalten ist, auch bei Bestandteilen der Zusammensetzung, die ein ähnliches oder gleiches spezifisches Gewicht aufweisen. Jede Bewegungsachse für sich kann linear oder bogenförmig verlaufen, so dass die nicht-lineare Bewegung des Behälters aus der Überlagerung der Bewegungen entlang zweier Bewegungsachsen erzeugt wird.

Die Behälteraufnahme ist zur Hin- und Herbewegung entlang zumindest einer Bahnkurve angetrieben, die durch Überlagerung der Hin- und Herbewegung entlang zumindest zwei Achsen, die in einem Winkel zueinander liegen, wobei bevorzugt zwei der Achsen in der Ebene des Querschnitts des an der Behälteraufnahme anzubringenden Behälters liegen, erzeugbar ist, wobei die Hin- und Herbewegung entlang jeder Achse bei verschiedenen Frequenzen und/oder mit Phasenversatz erfolgt. Die Bahnkurve ist durch die Überlagerung der Hin- und Herbewegung entlang zweier oder dreier Achsen mit verschiedenen Frequenzen und/oder mit Phasenversatz erzeugbar und weist eine Abfolge von Bahnsegmenten auf, von denen zumindest eines, bevorzugt jedes, genau eine vollständige Hin- und Herbewegung entlang der Achse, entlang derer die Hin- und Herbewegung mit der niedrigeren Frequenz erfolgt, umfasst oder daraus besteht, wobei die überlagerten Hin- und Herbewegungen mit der höheren Frequenz oder der gleichen Frequenz, jeweils optional mit Phasenversatz, entlang der anderen Achse oder Achsen umfasst wird. Dabei bildet die niedrigere Frequenz der vollständigen Hin- und Herbewegung die Frequenz der Abfolge der Bahnsegmente. Dabei ist zumindest einer der Exzenterantriebe, bevorzugt beide, zur Drehung bei der Frequenz gesteuert. Für jedes Bahnsegment ist ein Frequenzverhältnis der Hin- und Herbewegung entlang zweier Achsen von maximal 1:20 oder maximal 1:15 oder maximal 1:10, maximal 1:4 oder maximal 1:3 bevorzugt, bevorzugter zwischen 1:1 bis 1:2, noch bevorzugter größer als 1:1 bis 1:2 oder bis 1:1,5, z.B. mit einem Frequenzverhältnis von 1:1,001 bis 1:2 oder bis 1:1,5.

Bei einer Bahnkurve, die durch Überlagerung der Hin- und Herbewegung entlang zweier Achsen bei unterschiedlichen Frequenzen und/oder mit Phasenversatz der Drehung der Exzenterantriebe erzeugbar ist, liegen die Achsen bevorzugt in der Ebene des Querschnitts des Behälters, der an der Behälteraufnahme anzubringen ist. Generell bevorzugt stehen die linearen oder bogenförmigen Bewegungsachsen im rechten Winkel aufeinander. Generell umfasst die Bahnkurve keine Rotation der Behälteraufnahme oder des Behälters um seine eigene Achse.

Generell ist die Vorrichtung eingerichtet, die Behälteraufnahme für den Behälter entlang einer Bahnkurve anzutreiben, die durch Überlagerung der Hin- und Herbewegung zumindest zweier sich überlagernder linearer oder bogenförmiger Achsen gebildet wird, die in einem Winkel aufeinander stehen, wobei die Hin- und Herbewegung entlang der Achsen bei unterschiedlichen Frequenzen und/oder mit Phasenversatz erfolgt. Die Achsen, entlang derer die sich überlagernden Hin- und Herbewegungen bei unterschiedlicher Frequenz und/oder mit Phasenversatz verlaufen, bilden die Bahnkurve entlang derer die Hin- und Herbewegung der Behälteraufnahme und des daran angebrachten Behälters erfolgt.

Durch die Bewegung der Behälteraufnahme entlang der Bahnkurve ist die Vorrichtung eingerichtet, Bestandteile im Behälter relativ zum Behälter zu beschleunigen, so dass im Behälter enthaltene Feststoffe und/oder Flüssigkeiten als Bestandteile durch die Beschleunigung gegen die Behälterwand und durch die Bewegung entlang der oder gegen die Behälterwand geschert und dadurch intensiv gemischt werden.

Dadurch, dass die Bahnkurve durch die unterschiedlichen Frequenzen und/oder den Phasenversatz der sich überlagernden Bewegungen entlang der Achsen einstellbar oder vorbestimmt sein können, ist die Vorrichtung zur Hin- und Herbewegung der Behälteraufnahme und des daran angebrachten Behälters entlang der Bahnkurve und zur Relativbewegung von Bestandteilen bzw. deren Mischung gegenüber dem Behälter eingerichtet.

Generell bevorzugt ist die Behälteraufnahme und der Behälter darin nicht drehangetrieben und weiter bevorzugt nicht oder nicht vollständig drehbar, z.B. um maximal 30° oder um maximal 20° oder 10° um seine Mittelachse drehbar angelenkt. Generell bevorzugt ist der Behälter ausschließlich zu einer Hin- und Herbewegung entlang einer Bahnkurve angetrieben.

Die durch die verschiedenen Frequenzen und/oder den Phasenversatz der sich überlagernden Bewegungen entlang zumindest zweier Achsen einstellbare oder vorbestimmte Bahnkurve beschleunigt Feststoffe und/oder Flüssigkeiten als Bestandteile und eine Mischung dieser relativ zum Behälter, der an der Behälteraufnahme angebracht ist. Durch die Hin- und Herbewegung des Behälters werden die Bestandteile im Behälter und die Mischung dieser zur Bewegung gegen die Behälterinnenwand angetrieben.

Durch die Bahnkurve können der Einfalls- und Ausfallswinkel der Feststoffe und/oder Flüssigkeiten und der Mischung dieser gegen die Behälterwand bestimmt werden. Überdies ist die Vorrichtung optional eingerichtet, die Behälteraufnahme und den Behälter daran mit einstellbarer oder vorbestimmter Beschleunigung und Geschwindigkeit entlang der Bahnkurve zu bewegen. Dadurch, dass die Vorrichtung für eine einstellbare oder vorbestimmte Bahnkurve und/oder eine einstellbare oder vorbestimmte Beschleunigung und/oder eine einstellbare oder vorbestimmte Geschwindigkeit entlang der Bahnkurve der Hin- und Herbewegung eingerichtet ist, werden Feststoffe und/oder Flüssigkeiten und der Mischung dieser mit einstellbarer oder vorbestimmter Beschleunigung und/oder Geschwindigkeit relativ gegen den Behälter angetrieben und erlaubt eine vorbestimmte oder kontinuierliche Anpassung des Verfahrens an die Feststoffe und/oder Flüssigkeiten und an die Mischung dieser.

Generell kann eine Bahnkurve von zumindest zwei überlagerten Einzelschwingungen gebildet sein, bevorzugt gleicht eine Bahnkurve der durch Überlagerung von Hin- und Herbewegungen entlang zumindest zweier linearer oder bogenförmiger Bewegungsachsen bei jeweils unterschiedlichen Frequenzen und/oder durch Phasenversatz erzeugbaren Bahnkurve. Eine Hin- und Herbewegung entlang einer Bahnkurve, die der Hin- und Herbewegung entlang aufeinanderstehender linearer oder bogenförmiger Bewegungsachsen gleicht, die sich überlagern, weisen unterschiedliche Frequenzen auf und/oder haben einen Phasenversatz zueinander. Generell ist daher eine Bahnkurve keine Kreisbahn.

Der Unterschied der Frequenzen kann z.B. zumindest 0,01 Hz und/oder 0,01 % bis 900% betragen. Der Phasenversatz der Hin- und Herbewegungen entlang der linearen Achsen kann z.B. von 0,01° bis 180°, bevorzugt 1 bis 179° von 360°, die einer vollständigen Hin- und Herbewegung entspricht, betragen. Dabei sind 0,01 bis 180° einer vollständigen Hin- und Herbewegung von 360° gleich 0,0028 % bis 50% einer vollständigen Hin- und Herbewegung, 1 bis 179° von 360° sind gleich 0,28% bis 49,7% einer vollständigen Hin- und Herbewegung.

Dabei stehen die linearen oder bogenförmigen Bewegungsachsen z.B. senkrecht oder in einem anderen Winkel, z.B. 5° bis 85° zueinander, insbesondere in der Ebene des Querschnitts des Behälters und/oder senkrecht zu einer Mittelachse eines an der Behälteraufnahme angebrachten Behälters. Optional enthält die Bahnkurve zumindest einen gradlinigen Abschnitt, dessen Ende z.B. ein Scheitelpunkt der Bahnkurve ist, an dem die Feststoffe und/oder Flüssigkeiten und der Mischung dieser von der Behälterwand bzw. gegen die Behälterwand beschleunigt werden.

Zur Einstellung unterschiedlicher Frequenzen und/oder eines Phasenversatzes der überlagerten Hin- und Herbewegungen entlang zumindest zweier Bewegungsachsen können diese Hin- und Herbewegungen durch ein Getriebe oder eine Kulissenführung miteinander gekoppelt sein und von einem Motor angetrieben sein. Dabei kann ein von einem Motor angetriebenes Getriebe, das die Hin- und Herbewegung entlang der Bahnkurve einstellt, ein festes Übersetzungsverhältnis zwischen den sich überlagernden Bewegungen entlang jeder Achse aufweisen, oder ein einstellbares Übersetzungsverhältnis, z.B. ein kontinuierlich oder stufenweise schaltbares Getriebe sein. Optional kann das Getriebe schlupfbehaftet sein, z.B. einen Riemenantrieb aufweisen oder ein Reibradgetriebe sein.

Die Abtriebsdrehzahl des Getriebes, das einen oder beide der Exzenterantriebe antreibt, beträgt bevorzugt zumindest 1 Hz, bevorzugter zumindest 2,5 Hz, bevorzugter zumindest 5 Hz, bevorzugter zumindest 7 Hz. z.B. bis 50 Hz, bis 40 Hz, bis 30 Hz, bis 20 Hz oder bis 10 Hz. Dabei ist die Abtriebsdrehzahl des Getriebes gleich der Frequenz der Hin- und Herbewegung.

Alternativ kann die Hin- und Herbewegung entlang jeder der Bewegungsachsen von einem separaten Motor angetrieben sein, wobei für die Zwecke der Erfindung die niedrigere Abtriebsdrehzahl die Frequenz der Hin- und Herbewegung ist und die Frequenz der Abfolge der Bahnsegmente bildet. In jeder Ausführungsform kann die Drehzahl jedes Antriebsmotors gesteuert sein, fest eingestellt oder über die Dauer des Verfahrens veränderlich.

Dabei erlaubt die Vorrichtung, dass die Bahnkurve die Feststoffe und/oder Flüssigkeiten als Bestandteile und der Mischung dieser in einer definierten Richtung auf einen gezielten Ort der Behälterinnenwandung gezielt beschleunigt. Dabei kann die Geometrie des Behälters und dessen Innenwandung in Verbindung mit der Bahnkurve den Mischvorgang unterstützen, so dass die Bahnkurve abhängig von Form und Größe des Behälterquerschnitts eingestellt werden kann.

Optional ist die Vorrichtung eingerichtet, die Bahnkurve der Hin- und Herbewegung und/oder die Beschleunigung und/oder Geschwindigkeit der Hin- und Herbewegung während des Verfahrens zu ändern, z.B. in einer ersten Phase die Hin- und Herbewegung entlang einer ersten Bahnkurve und mit einer ersten Beschleunigung und Geschwindigkeit einzustellen und die Hin- und Herbewegung in einer anschließenden zweiten Phase entlang einer geänderten Bahnkurve und/oder geänderten Beschleunigung und/oder Geschwindigkeit einzustellen.

Weiter optional ist die Hin- und Herbewegung in einer ersten Phase eine lineare Hin- und Herbewegung und in einer zweiten Phase eine Hin- und Herbewegung entlang ineinander übergehender Bahnkurven. Dabei kann die Bahnkurve z.B. durch ein Getriebe bestimmt sein, das die Bewegung des Behälters antreibt.

Die Vorrichtung erlaubt durch die Einstellung der Bahnkurve und Beschleunigung der Hin- und Herbewegung des Behälters eine vorbestimmte oder dynamisch veränderbare und gerichtete Beschleunigung der Inhaltsstoffe als Prozessguts relativ zum Behälter.

In einer Ausführungsform, in der der Behälter in einer ersten Phase zu einer linearen Hin- und Herbewegung gesteuert angetrieben sein kann, ist die Vorrichtung eingerichtet, Feststoffe und/oder Flüssigkeiten und die Mischung dieser mit einer steuerbaren Beschleunigung senkrecht gegen die Behälterwand zu bewegen, die signifikant größer als die Erdbeschleunigung und daher im Wesentlichen unabhängig von der Erdbeschleunigung ist, z.B. mit einem Beschleunigungsmaximum von zumindest 15 m/s², bevorzugt 25 m/s², bevorzugt zumindest 50 m/s² oder zumindest 100 m/s² oder zumindest 200 m/s² oder zumindest 350 m/s² z.B. jeweils bis 500 m/s².

Generell kann die Vorrichtung eingerichtet sein, die Behälteraufnahme und einen daran angebrachten Behälter mit einem Beschleunigungsmaximum von zumindest 20 m/s² oder mit zumindest 100 m/s², z.B. zumindest 200 m/s², bevorzugt bis zu 1000 m/s² oder bis zu 300 m/s² entlang der Bahnsegmente, z.B. in einem Scheitelpunkt der Bahnsegmente, zu beschleunigen.

Die Behälteraufnahme und der daran angebrachte Behälter ist bevorzugt zu einer Hin- und Herbewegung mit einem Beschleunigungsmaximum von zumindest 0,5 m/s² oder zumindest 1 m/s² oder zumindest 2 m/s² zumindest 3,5 m/s², bevorzugt zumindest 60 m/s², bevorzugter zumindest 100 m/s², zumindest 150 m/s², zumindest 160 m/s², zumindest 200 m/s², z.B. jeweils bis zu 300 m/s² oder 450 m/s², bis zu 260 m/s² oder bis zu 250 m/s² entlang jeder von zwei Achsen angetrieben. Generell bevorzugt ist der Behälter in Kombination mit der Beschleunigung zu einer mittleren Geschwindigkeit von zumindest 0,5 m/s, bevorzugt zumindest 2 m/s, bevorzugter zumindest 3,5 m/s, z.B. bis 10 m/s oder bis 20m/s oder bis 6 m/s, z.B. 3 bis 4 m/s, jeweils entlang einer der Achsen, bevorzugt entlang jeder Achse angetrieben. Dabei ist der Weg der Bewegung entlang zumindest einer Achse, bevorzugt entlang jeder Achse z.B. 0,1 cm bis 24 cm.

Die Behälteraufnahme und der daran angebrachte Behälter kann z.B. zu einer Hin- und Herbewegung angetrieben sein, die sich entlang jeder Achse über einen Weg von zumindest 1 mm oder zumindest 2,5 mm, zumindest 1 cm, bevorzugter zumindest 2 cm oder zumindest 5 cm, zumindest 10 cm oder zumindest 15 cm, z.B. jeweils bis 100 cm, bis 50 cm, bis 30 cm oder bis 20 cm erstreckt. Weiter bevorzugt ist die Hin- und Herbewegung des Behälters harmonisch. Die Hin- und Herbewegung der Behälteraufnahme kann in einer ersten Phase linear sein, generell ist die Bahnkurve nicht-linear und kann z.B. sinusförmig, schleifenförmig oder bogenförmig sein, bevorzugt entlang einer sogenannten Lissajous-Figur oder Hypozykloide verlaufen, die bevorzugt in der Ebene liegt bzw. zweidimensional ist. Bevorzugt ist die Hin- und Herbewegung in einer ersten Phase linear und in einer zweiten Phase entlang zumindest zweier ineinander übergehender, nicht-linearer Bahnsegmente, die jeweils zumindest einen Scheitelpunkt enthalten, zu einer Bahnkurve ausgebildet. Denn generell fördert eine nicht-lineare Bahnkurve, z.B. eine Bewegung entlang einer Bahnkurve deren Bahnsegmente zumindest jeweils einen Scheitelpunkt aufweisen, ein Aufprallen von Feststoffen und/oder Flüssigkeiten und der Mischung dieser z.B. senkrecht auf die Behälterwand sowie eine Bewegung entlang der Behälterwand.

Bevorzugt umfasst die Hin- und Herbewegung die Hin- und Herbewegung entlang einer Bahnkurve, die zumindest zwei, bevorzugt zumindest drei, bevorzugter zumindest vier unterschiedliche Bahnsegmente umfasst, die jeweils zumindest einen Scheitelpunkt aufweisen und bevorzugt in zeitlicher Abfolge, bevorzugt programmgesteuert ineinander übergehen. Jede der Bewegungsachsen, entlang derer sich die Bewegungen zu einer Bahnkurve überlagern, für sich kann linear oder bogenförmig verlaufen, so dass die nicht-lineare Bewegung der Behälteraufnahme entlang einer Abfolge von Bahnsegmenten aus der Überlagerung der Bewegungen entlang zweier Bewegungsachsen erzeugt wird. Die Scheitelpunkte und zwischenliegenden Abschnitte eines Bahnsegments werden durch den Frequenzunterschied und/oder die Phasenlage der überlagerten Hin- und Herbewegungen entlang zumindest zweier Achsen bestimmt. Generell kann die Vorrichtung eingerichtet sein, den Frequenzunterschied und/oder die Phasenlage während der Hin- und Herbewegung zu verändern.

Die Erfindung wird nun genauer mit Bezug auf die Figuren beschrieben, die schematisch in
- Fig. 1 eine Ausführungsform des erfindungsgemäßen Antriebs,
- Fig. 2 eine Ausführungsform,
- Fig. 3 eine Ausführungsform,
- Fig. 4 eine Ausführungsform und in
- Fig. 5 eine noch weitere Ausführungsform
zeigen.

In den Figuren bezeichnen gleiche Bezugsziffern funktionsgleiche Elemente.

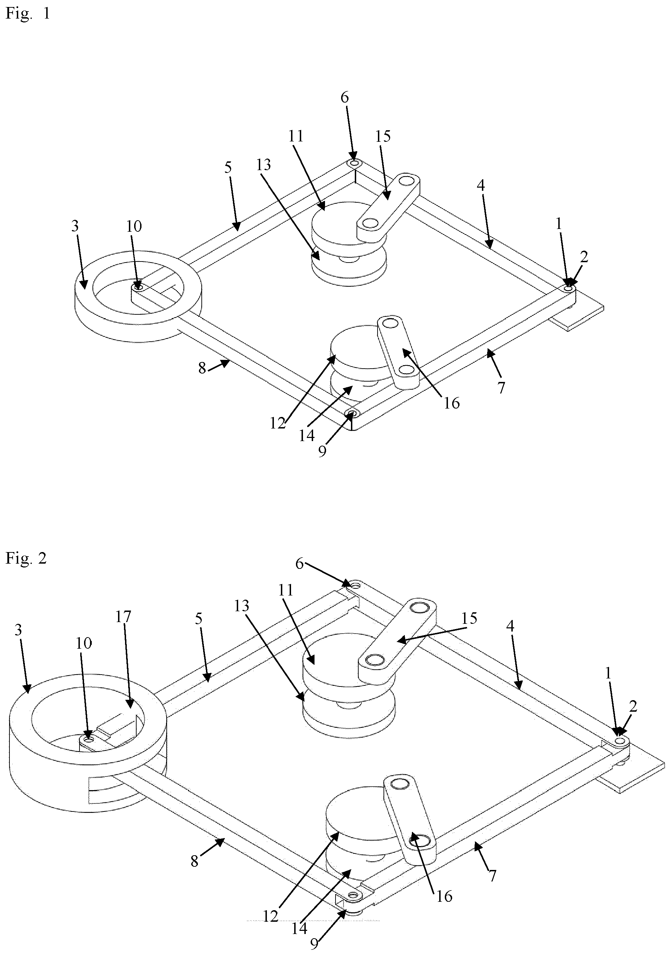

Die Fig. 1 zeigt eine Ausführungsform des erfindungsgemäßen Antriebs, der sich zwischen einem ersten ortsfesten Drehlager 1 und einem zweiten ortsfesten Drehlager 2 einerseits und einem Loslager, an dem eine Behälteraufnahme 3 angebracht ist, erstreckt. Am ersten Drehlager 1 ist ein erster Hebel 4 schwenkbar angelenkt, an dessen dem ersten Drehlager 1 gegenüberliegenden Ende ein zweiter Hebel 5 mittels eines ersten Verbindungslagers 6 schwenkbar angelenkt ist. Das dem ersten Verbindungslager 6 gegenüberliegende Ende des zweiten Hebels 5 ist mit der Behälteraufnahme 3 verbunden, bevorzugt daran schwenkbar angelenkt. Am zweiten Drehlager 2 ist ein dritter Hebel 7 schwenkbar angelenkt, an dessen dem zweiten Drehlager 2 gegenüberliegenden Ende ein vierter Hebel 8 mittels eines zweiten Verbindungslagers 9 schwenkbar angelenkt ist. Das dem zweiten Verbindungslager 9 gegenüberliegende Ende des vierten Hebels 8 ist mit der Behälteraufnahme 3 verbunden, bevorzugt daran schwenkbar angelenkt. Generell können der zweite Hebel 5 und der vierte Hebel 8 dadurch an der Behälteraufnahme 3 angebracht sein, dass der zweite Hebel 5 und der vierte Hebel 8 an einem vierten Schwenkgelenk 10 aneinander angelenkt sind und die Behälteraufnahme 3 an der Achse dieses vierten Schwenkgelenks 10 oder an einem von zweitem Hebel 5 und viertem Hebel 8 angebracht ist.

In der dargestellten Ausführungsform weist der Antrieb zwei Exzenterantriebe 11, 12 auf, jeweils mit einem gesteuerten Drehmotor 13, 14. Ein erster Exzenterantrieb 11 weist einen ortsfest angebrachten ersten Drehmotor 13 auf, der mittels eines exzentrischen ersten Antriebsarms 15 mit dem ersten Hebel 4 verbunden ist, so dass der erste Antriebsarm 15 den ersten Hebel 4 zur Verschwenkung um das erste Drehlager 1 antreibt. Der zweite Exzenterantrieb 12 weist einen ortsfest angebrachten zweiten Drehmotor 14 auf, der mittels eines exzentrischen zweiten Antriebsarms 16 mit dem dritten Hebel 7 verbunden ist, so dass der zweite Antriebsarm 16 den dritten Hebel 7 zur Verschwenkung um das zweite Drehlager 2 antreibt. Der erste Drehmotor 13 und der zweite Drehmotor 14 sind bevorzugt dadurch ortsfest angeordnet, dass sie an einem Gestell angebracht sind, an dem auch das erste und das zweite Drehlager 1, 2 angebracht sind.

Die Fig. 2 zeigt im Detail das vierte Schwenkgelenk 10, an dem der zweite Hebel 5 und der vierte Hebel 8 aneinander angelenkt sind. Die Behälteraufnahme 3 kann an einem Fixpunkt 17 mit dem zweiten Hebel 5 fest verbunden sein, während der vierte Hebel 8 nicht direkt mit der Behälteraufnahme 3 verbunden ist, insbesondere gegenüber der Behälteraufnahme 3 frei schwenkbar ist.

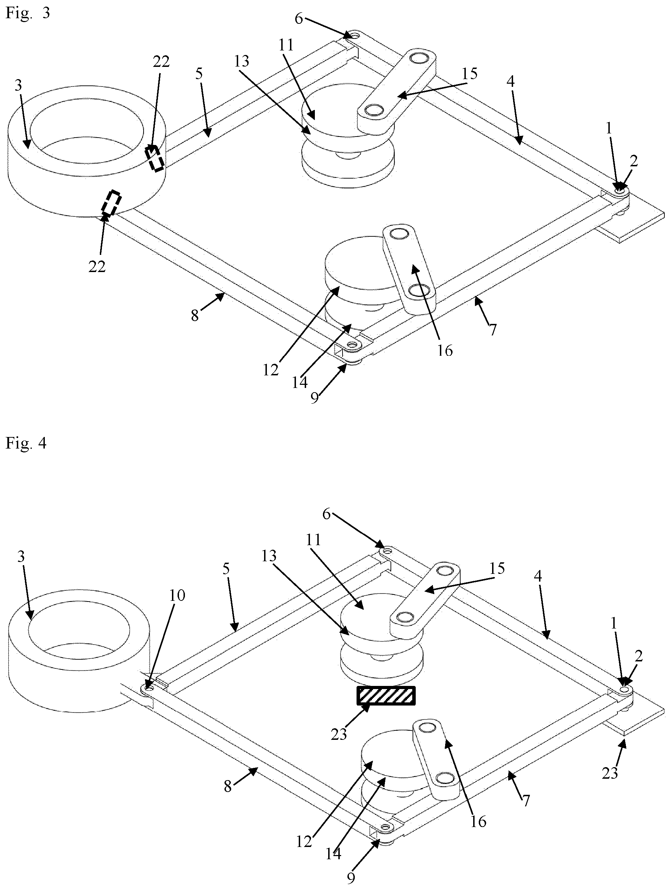

Die Fig. 3 zeigt eine Ausführungsform, bei der der zweite Hebel 5 und der vierte Hebel 8 nicht direkt aneinander angelenkt sind, sondern jeder mit der Behälteraufnahme 3 verbunden ist, wobei zumindest einer von zweitem Hebel 5 und viertem Hebel 8 schwenkbar mit der Behälteraufnahme 3 verbunden ist, oder beide, zweiter Hebel 5 und vierter Hebel 8 schwenkbar mit der Behälteraufnahme 3 verbunden sind. In Fig. 3 ist ein Schwenklager 22 zwischen jedem von zweitem Hebel 5 und viertem Hebel 8 und der Behälteraufnahme 3 gezeigt.

Die Fig. 4 zeigt eine Ausführungsform, bei der sowohl der zweite Hebel 5 als auch der vierte Hebel 8 direkt aneinander in einem vierten Schwenkgelenk 10 angelenkt und mit der Behälteraufnahme 3 verbunden sind. Dabei kann die Behälteraufnahme 3 mit dem zweiten Hebel 5 verbunden sein, um eine unkontrollierte Bewegung der Behälteraufnahme 3 am vierten Schwenkgelenk 10 zu vermeiden.

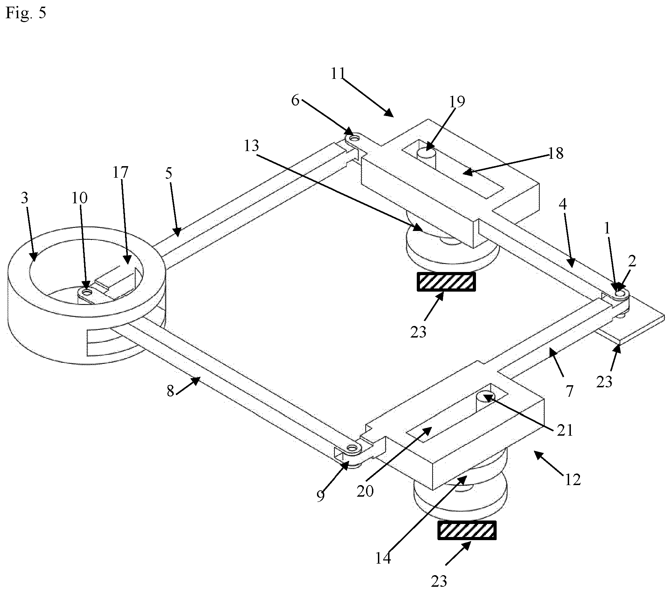

Die Fig. 5 zeigt eine Ausführungsform, bei der sowohl der erste Exzenterantrieb 11 als auch der zweite Exzenterantrieb 12 von jeweils einem Drehmotor 13, 14 angetrieben sind. Der erste Drehmotor 13 treibt einen ersten Antriebsbolzen 19 entlang einer Kreisbahn an. Der erste Antriebsbolzen 19 ist in einer ersten Führung 18 geführt, die sich entlang des ersten Hebels 4 erstreckt, so dass die Bewegung des ersten Antriebsbolzens 19 zu einer Verschwenkung des ersten Hebels 4 um dessen erstes Drehlager 1 führt. Der zweite Exzenterantrieb wird von einem zweiten Drehmotor 14 angetrieben, der einen zweiten Antriebsbolzen 21 entlang einer Kreisbahn antreibt. Der zweite Antriebsbolzen ist in der zweiten Führung 20 geführt, die sich entlang des dritten Hebels 7 erstreckt, so dass die Kreisbewegung des zweiten Antriebsbolzens 21 den dritten Hebel 7 zur Verschwenkung um das zweite Drehlager 2 antreibt. Schematisch gezeigt ist ein Gestell 23, an dem das erste und das zweite Drehlager 1, 2 und der erste und der zweite Exzenterantrieb 11, 12 angebracht sind.

### Bezugszeichen:

1 erstes Drehlager
2 zweites Drehlager
3 Behälteraufnahme
4 erster Hebel
5 zweiter Hebel
6 erstes Verbindungslager
7 dritter Hebel
8 vierter Hebel
9 zweites Verbindungslager
10 viertes Schwenkgelenk
11 erster Exzenterantrieb
12 zweiter Exzenterantrieb
13 erster Drehmotor
14 zweiter Drehmotor
15 erster exzentrischer Antriebsarm
16 zweiter exzentrischer Antriebsarm
17 Fixpunkt
18 erste Führung
19 erster Antriebsbolzen
20 zweite Führung
21 zweiter Antriebsbolzen
22 Schwenklager
23 Gestell

## Patentansprüche

1. Antrieb zur Hin- und Herbewegung einer Behälteraufnahme (3) entlang einer Bahnkurve mit einem an einem ersten ortsfesten Schwenklager (1) angelenkten ersten Hebel (4), einem gegenüber dem ersten Schwenklager (1) am ersten Hebel (4) in einem ersten Verbindungslager (6) angelenkten zweiten Hebel (5), an dem gegenüber dem ersten Hebel (4) eine Behälteraufnahme (3) angebracht ist,
einem an einem zweiten ortsfesten Schwenklager (2) angelenkten dritten Hebel (7), einen gegenüber dem zweiten ortsfesten Schwenklager (2) am dritten Hebel (7) in einem zweiten Verbindungslager (9) angelenkten vierten Hebel (8), an dem gegenüber dem dritten Hebel (7) die Behälteraufnahme (3) angebracht ist,
wobei das erste ortsfeste Schwenklager (1) und das zweite ortsfeste Schwenklager (2) zueinander festgelegt sind, in einem Abstand voneinander oder um dieselbe Schwenkachse schwenkbar, und wobei zumindest einer von zweitem Hebel (5) und viertem Hebel (8) schwenkbar an der Behälteraufnahme (3) angelenkt ist,
mit einem ersten Exzenterantrieb (11), der mit einem von erstem Hebel (4) und zweitem Hebel (5) verbunden ist und einem zweiten Exzenterantrieb (12), der mit einem von drittem Hebel (7) und viertem Hebel (8) verbunden ist.

2. Antrieb nach Anspruch 1, **dadurch gekennzeichnet, dass** der erste Exzenterantrieb (11) und der zweite Exzenterantrieb (12) jeweils einen gesteuerten Drehmotor (13, 14) aufweisen, die ortsfest angebracht sind.

3. Antrieb nach Anspruch 2, **dadurch gekennzeichnet, dass** der jeweils gesteuerte Drehmotor (13, 14) des ersten Exzenterantriebs (11) und des zweiten Exzenterantriebs (12) von einem gemeinsamen Drehmotor mit Getriebe gebildet werden.

4. Antrieb nach einem der voranstehenden Ansprüche, **dadurch gekennzeichnet, dass** der erste Exzenterantrieb (11) und der zweite Exzenterantrieb (12) von einem gemeinsamen gesteuerten und ortsfest angebrachten Drehmotor mit zwischenliegendem Getriebe angetrieben sind.

5. Antrieb nach einem der voranstehenden Ansprüche, **dadurch gekennzeichnet, dass** zumindest einer von erstem Exzenterantrieb (11) und zweitem Exzenterantrieb (12) einen exzentrischen Antriebsarm (15, 16) aufweist, der einen Drehmotor (13, 14) mit zumindest einem von erstem, zweiten, dritten und vierten Hebel (4, 5, 7, 8) schwenkbar verbindet.

6. Antrieb nach einem der Ansprüche 1 bis 4, **dadurch gekennzeichnet, dass** zumindest einer von erstem Exzenterantrieb (11) und zweitem Exzenterantrieb (12) einen zur Kreisbewegung angetriebenen Antriebsbolzen (19, 21) aufweist, der in einer Führung (18, 20) geführt ist.

7. Antrieb nach einem der voranstehenden Ansprüche, **dadurch gekennzeichnet, dass** jeder von zweitem Hebel (5) und viertem Hebel (8) drehbar an der Behälteraufnahme angelenkt ist.

8. Antrieb nach einem der voranstehenden Ansprüche, **dadurch gekennzeichnet, dass** der erste und der zweite Exzenterantrieb (11, 12) und das erste und zweite ortsfeste Schwenklager (1, 2) an einem gemeinsamen Gestell (23) angebracht sind.

9. Antrieb nach einem der voranstehenden Ansprüche, **dadurch gekennzeichnet, dass** zumindest einer von erstem und zweitem Exzenterantrieb (11, 12) verschieblich an einem Gestell (23) angebracht ist.

10. Antrieb nach einem der voranstehenden Ansprüche, **dadurch gekennzeichnet, dass** das erste und zweite ortsfeste Schwenklager (1, 2) eingerichtet sind, um dieselbe Schwenkachse schwenkbar zu sein.

11. Antrieb nach einem der voranstehenden Ansprüche, **dadurch gekennzeichnet, dass** der erste Exzenterantrieb (11) und der zweite Exzenterantrieb (12) zum Antreiben mit unterschiedlichen Frequenzen und/oder mit Phasenversatz gesteuert sind.

12. Verfahren zur Behandlung von Inhaltsstoffen in einem Behälter, der mittels des Antriebs entlang einer Bahnkurve angetrieben und zwangsgeführt ist, **dadurch gekennzeichnet, dass** der Antrieb einer nach einem der voranstehenden Ansprüche ist und der erste Exzenterantrieb (11) und der zweite Exzenterantrieb (12) zum Antreiben mit unterschiedlichen Frequenzen und/oder mit Phasenversatz gesteuert sind.

## Claims

1. Drive for the reciprocating movement of a retainer of a container (3) along a trajectory curve with a first lever (4) articulated on a first stationary pivot bearing (1), a second lever (5) articulated on the first lever (4) in a first connecting bearing (6) opposite the first pivot bearing (1), on which second lever a retainer of a container (3) is mounted opposite the first lever (4),
a third lever (7) articulated on a second stationary pivot bearing (2), a fourth lever (8) articulated on the third lever (7) in a second connecting bearing (9) opposite the second stationary pivot bearing (2), on which lever the retainer of the container (3) is mounted opposite the third lever (7),
wherein the first stationary pivot bearing (1) and the second stationary pivot bearing (2) are fixed relative to one another, at a distance from one another or pivotable about the same pivot axis, and wherein at least one of the second lever (5) and the fourth lever (8) is pivotably articulated to the retainer of a container (3),
with a first eccentric drive (11), which is connected to one of the first lever (4) and the second lever (5), and a second eccentric drive (12), which is connected to one of the third lever (7) and the fourth lever (8).

2. Drive according to claim 1, **characterised in that** the first eccentric drive (11) and the second eccentric drive (12) each have a controlled rotary motor (13, 14), which are mounted in a stationary position.

3. Drive according to claim 2, **characterised in that** the respectively controlled rotary motor (13, 14) of the first eccentric drive (11) and of the second eccentric drive (12) are formed by a common rotary motor with a transmission.

4. Drive according to one of the preceding claims, **characterised in that** the first eccentric drive (11) and the second eccentric drive (12) are driven by a jointly controlled and stationarily mounted rotary motor with an intermediate transmission.

5. Drive according to one of the preceding claims, **characterised in that** at least one of the first eccentric drive (11) and the second eccentric drive (12) has an eccentric drive arm (15, 16) which pivotably connects a rotary motor (13, 14) to at least one of the first, second, third and fourth levers (4, 5, 7, 8).

6. Drive according to one of claims 1 to 4, **characterised in that** at least one of the first eccentric drive (11) and the second eccentric drive (12) has a drive pin (19, 21) which is driven for circular movement and is guided in a guide (18, 20).

7. Drive according to one of the preceding claims, **characterised in that** each of the second lever (5) and fourth lever (8) is pivotably articulated to the retainer of a container.

8. Drive according to one of the preceding claims, **characterised in that** the first and second eccentric drives (11, 12) and the first and second stationary pivot bearings (1, 2) are mounted on a common frame (23).

9. Drive according to one of the preceding claims, **characterised in that** at least one of the first and second eccentric drives (11, 12) is slidably mounted on a frame (23).

10. Drive according to one of the preceding claims, **characterised in that** the first and second stationary pivot bearings (1, 2) are arranged to be pivotable about the same pivot axis.

11. Drive according to one of the preceding claims, **characterised in that** the first eccentric drive (11) and the second eccentric drive (12) are controlled for driving with different frequencies and/or with a phase offset.

12. Process for treating ingredients in a container which is driven and positively guided along a trajectory curve by means of the drive, **characterised in that** the drive is one according to one of the preceding claims and the first eccentric drive (11) and the second eccentric drive (12) are controlled for driving with different frequencies and/or with a phase offset.

## Revendications

1. Entraînement pour le mouvement de va-et-vient d'un logement de récipient (3) le long d'une courbe de trajectoire avec un premier levier (4) articulé sur un premier palier de pivotement fixe (1), un deuxième levier (5) articulé par rapport au premier palier de pivotement (1) sur le premier levier (4) dans un premier palier de liaison (6), sur lequel un logement de récipient (3) est monté par rapport au premier levier (4),
un troisième levier (7) articulé sur un deuxième palier de pivotement fixe (2), un quatrième levier (8) articulé sur le troisième levier (7) dans un deuxième palier de liaison (9) par rapport au deuxième palier de pivotement fixe (2), sur lequel le logement de récipient (3) est monté par rapport au troisième levier (7),
dans lequel le premier palier de pivotement fixe (1) et le deuxième palier de pivotement fixe (2) sont fixés l'un par rapport à l'autre, à une certaine distance l'un de l'autre ou peuvent pivoter autour du même axe de pivotement, et dans lequel au moins l'un du deuxième levier (5) et du quatrième levier (8) est articulé de manière pivotante sur le logement de récipient (3),
avec un premier entraînement excentrique (11), qui est relié à l'un du premier levier (4) et du deuxième levier (5), et un deuxième entraînement excentrique (12), qui est relié à l'un du troisième levier (7) et du quatrième levier (8).

2. Entraînement selon la revendication 1, **caractérisé en ce que** le premier entraînement excentrique (11) et le deuxième entraînement excentrique (12) présentent chacun un moteur de rotation commandé (13, 14) qui sont montés de manière fixe.

3. Entraînement selon la revendication 2, **caractérisé en ce que** le moteur de rotation (13, 14) respectivement commandé du premier entraînement excentrique (11) et du deuxième entraînement excentrique (12) est formé par un moteur de rotation commun avec engrenage.

4. Entraînement selon l'une des revendications précédentes, **caractérisé en ce que** le premier entraînement excentrique (11) et le deuxième entraînement excentrique (12) sont entraînés par un moteur rotatif commun commandé et monté de manière fixe avec un engrenage intermédiaire.

5. Entraînement selon l'une des revendications précédentes, **caractérisé en ce qu'**au moins l'un du premier entraînement excentrique (11) et du deuxième entraînement excentrique (12) présente un bras d'entraînement excentrique (15, 16) qui relie de manière pivotante un moteur rotatif (13, 14) à au moins l'un des premier, deuxième, troisième et quatrième leviers (4, 5, 7, 8).

6. Entraînement selon l'une des revendications 1 à 4, **caractérisé en ce qu'**au moins l'un du premier entraînement excentrique (11) et du deuxième entraînement excentrique (12) présente un axe d'entraînement (19, 21) entraîné pour le mouvement circulaire, qui est guidé dans un guidage (18, 20).

7. Entraînement selon l'une des revendications précédentes, **caractérisé en ce que** chacun du deuxième levier (5) et du quatrième levier (8) est articulé de manière rotative sur le logement du récipient.

8. Entraînement selon l'une des revendications précédentes, **caractérisé en ce que** le premier et le deuxième entraînement excentrique (11, 12) et le premier et le deuxième palier de pivotement fixe (1, 2) sont montés sur un bâti commun (23).

9. Entraînement selon l'une des revendications précédentes, **caractérisé en ce qu'**au moins l'un des premier et deuxième entraînements excentriques (11, 12) est monté de manière coulissante sur un bâti (23).

10. Entraînement selon l'une des revendications précédentes, **caractérisé en ce que** le premier et le deuxième palier de pivotement fixe (1, 2) sont adaptés pour pouvoir pivoter autour du même axe de pivotement.

11. Entraînement selon l'une des revendications précédentes, **caractérisé en ce que** le premier entraînement excentrique (11) et le deuxième entraînement excentrique (12) sont commandés pour être entraînés à des fréquences différentes et/ou avec un déphasage.

12. Procédé de traitement de substances contenues dans un récipient, qui est entra né et guidé de manière forcée le long d'une courbe de trajectoire au moyen de l'entraînement, **caractérisé en ce que** l'entraînement est un entraînement selon l'une des revendications précédentes et le premier entraînement excentrique (11) et le deuxième entraînement excentrique (12) sont commandés pour l'entraînement avec des fréquences différentes et/ou avec un déphasage.
